# EUROPÄISCHE PATENTSCHRIFT

(11) **EP 1 238 253 B1**
(45) Veröffentlichungstag und Bekanntmachung des Hinweises auf die Patenterteilung: **12.01.2011**
(21) Anmeldenummer: 00987233.4
(22) Anmeldetag: 10.11.2000
(51) Int. Cl.: G01M 3/22, G01M 3/20

(54) **VERFAHREN ZUR LECKSUCHE UND LECKLOKALISIERUNG SOWIE ZUR DURCHFÜHRUNG DIESER VERFAHREN GEEIGNETE VORRICHTUNGEN**
METHOD FOR DETECTING AND LOCALISING LEAKS AND SUITABLE DEVICES FOR CARRYING OUT SAID METHOD
PROCEDE POUR DETECTER ET LOCALISER DES FUITES, ET DISPOSITIF POUR METTRE EN OEUVRE LEDIT PROCEDE

(30) Priorität: 14.12.1999 DE 19960174
(43) Veröffentlichungstag der Anmeldung: 11.09.2002
(73) Patentinhaber: Inficon GmbH, 50968 Köln (DE)
(72) Erfinder: GROSSE BLEY, Werner, 53125 Bonn (DE)
(74) Vertreter: Selting, Günther
(86) Internationale Anmeldenummer: PCT/EP2000/011153
(87) Internationale Veröffentlichungsnummer: WO 2001/044775

(56) Entgegenhaltungen:
- GB-A- 2 133 552
- US-A- 5 327 776
- PATENT ABSTRACTS OF JAPAN vol. 13, no. 7 (P-810) [3355], 10. Januar 1989 (1989-01-10) & JP 63 214635 A (FUJIKURA LTD.), 7. September 1988 (1988-09-07)

## Beschreibung

Die Erfindung bezieht sich auf Verfahren der genannten Art entsprechend den Oberbegriffen der Patentansprüche 1 und 14 sowie auf Einrichtungen zur Durchführung dieser Verfahren entsprechend den Oberbegriffen der Patentansprüche 9 und 17.

Es ist bekannt, Lecks mit Hilfe von leichten Testgasen, vorzugsweise Helium, zu suchen und gegebenenfalls festzustellen. Dazu wird die auf Lecks zu untersuchende Wandung einem Differenzdruck ausgesetzt. Auf der Seite mit dem höheren Druck wird der Testgaspartialdruck erhöhe. Ist ein Leck vorhanden, tritt Testgas hindurch. Auf der Seite mit dem niedrigeren Druck befindet sich ein Testgasdetektor, üblicherweise ein Massenspektrometer, das den Anstieg des Testgaspartialdrucks registriert.

Aus der GB-A-2 133 552 sind ein Verfahren und eine Vorrichtung zu Gegenstrom-Lecksuche mit Helium an unter Unterdruck stehenden Prüflingen bekannt. Zwei Methoden der Lecksuche sind offenbart. Entweder enthält der Prüfling Testgas oder er wird von außen mit einem Testgasstrahl besprüht. Ist der Prüfling an eine Vakuumpumpe angeschlossen, gelangt in breiden Fällen Testgas in die Leitung zwischen Prüfling und Vakuumpumpe und wird von einem daran angeschlossenen Detektor registriert. Für den Fall, dass der Prüfling Testgas enthält, besteht auch hoch die Möglichkeit, dass seine Oberfläche mit Hilfe, eines Schnüfflers abgesaugt wird. Der abgesaugte Gasstrahl wird mit Hilfe des Detektors auf das Vorhandensein von Testgas untersucht.

Massenspektrometer sind relativ teuer und empfindlich. Sie können nur bei Drücken von etwa 10⁻⁴ mbar oder kleiner betrieben werden. Der Einsatz von Massenspekfrometern ist deshalb mit einem relativ hohen technischen und finanziellen Aufwand verbunden.

Der vorliegenden Erfindung liegt die Aufgabe zu Grunde, Verfahren der eingangs erwähnten Art sowie zur Durchführung dieser Verfahren geeignete Vorrichtungen vorzuschlagen, bei denen Sauerstoff als Testgas eingesetzt wird und bei denen neben der Feststellung eines Lecks auch dessen Lokalisierung in einfacher Weise möglich ist.

Erfindungsgemäß wird diese Aufgabe durch die kennzeichnenden Merkmale der Patentansprüche gelöst. Die erfindungsgemäße Verwerdung eines Gasstrahles erlaubt nicht nur die Leckfeststellung, sondern auch die Lokalisierung des Lecks. Sowohl bei einem unter Unterdruck als auch bei einem unter Überdruck stehenden Prüfling ist die Lecksuche und Lecklokalisierung durchführbar. Lediglich die Eigenschaften des Gasstrahles müssen entsprechend der Erfindung unterschiedlich gewählt werden.

Der Einsatz von Sauerstoff als Testgas bei einer Lecksuche ist bekannt. Die US-A-5 365 772 offenbart eine CVD-Anlage mit einer Vakuumkammer. Ihre Dichtheit wird dadurch überwacht, das laufend festgestellt wird, ob Sauerstoff eindringt, oder nicht. Ein Sauerstoffsensor ist entweder direkt an die Kammer oder an die Verbindungsleitung zwischen Kammer und Vakuumpumpe angeschlossen.

Die JP-A-6 321 4635 offenbart die Lecksuche an einem unter Überdruck stehenden Prüfling. Die Lecksuche erfolgt in einer Kammer, in der sich ein Sauerstoffsensor befindet. In der Kammer wird nach dem Einbringen des Prüflings die Umgebungsluft durch Spülen mit reinem Stickstoff entfernt. Für den Fall, dass Sauerstoff durch die Wandung des Prüflings nach außen dringt, ist ein Leck vorhanden.

Die Verwendung von Sauerstoff als Testgas erlaubt den Einsatz von Sauerstoffsensoren als Testgasdetktor. Vorzugsweise werde O₂-Festelektrolyt-Sensoren, eingesetzt. Diese finden seit geraum Zeit Verwendung z.B. bei der Abgasüberwachung für den Automobilkatalysator. Sie benötigen kein Hochvakuum für ihren Betrieb. Bei einer Ausführung in Mikro-Bauweise sind sie in weiten Bereichen linear und vor allem ausreichend empfindlich, so dass die erfindungsgemäße Lecksuche mit einer der Helium-Lecksuche vergleichbaren Empfindlichkeit durchgeführt werden kann. Die Verwendung von Sauerstoff als Testgas hat noch den weiteren Vorteil, dass der Anwender dieses Lecksuchverfahrens gerade über das Vorhandensein desjenigen Gases, nämlich 0₂, informiert wird, das bei vielen Applikationen von besondere Bedeutung ist.

Weitere Vorteile und Einzelheiten der Erfindung sollen an Hand von in den Figuren 1 bis 4 dargestellten Ausführungsbeispielen und der dazu beschriebenen Verfahren erläutert werden. Es zeigen
- Figur 1: eine Einrichtung zur Lecksuche und Leckortung an einem unter Unterdruck stehenden Behälter,
- Figur 2.: einen kombinierten Sauerstoff-/Druck-Sensor,
- Figur 3: eine Einrichtung zur Lecksuche und Leckortung an einem mit einem sauerstofffreien Gas gefüllten, unter Überdruck stehenden Behälter und
- Figur 4: eine Einrichtung zur integralen Lecksuche an Prüf- lingen, die mit sauerstoffhaltigem Gas gefüllt sind.

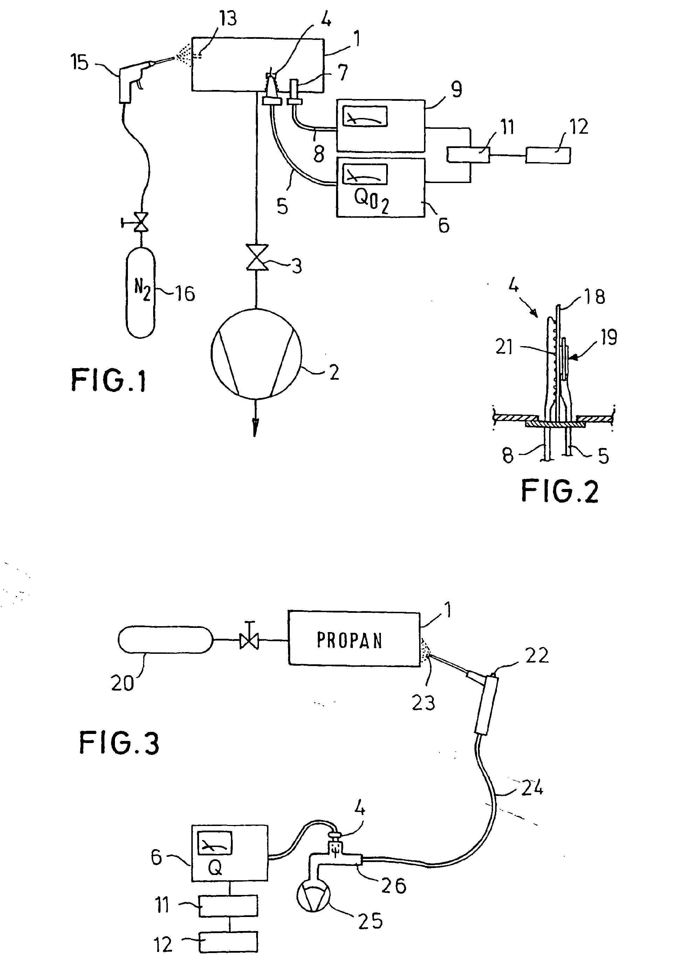

In Figur 1 ist der unter Unterdruck stehende Behälter mit 1 zeichnet. An den Behälter 1 ist die Vakuumpumpe 2 über das Ventil 3 angeschlossen. Im Behälter 1 befindet sich der Sauerstoffsensor 4, der über die Leitung 5 mit einem Registriergerät 6 in Verbindung steht. Zusätzlich befindet sich im Behälter 1 ein Drucksensor 7, der über die Leitung 8 mit dem Registriergerät 9 verbunden ist. An die Geräte 6 und 9 schließt sich eine Auswerteeinheit 11 an, die mit einem Alarmgeber 12 verbunden ist. Ein in der Wandung des Behälters 1 befindliches Leck ist mit 13 bezeichnet.

Wenn das Leck 13 im evakuierten Zustand des Behälters 1 auftritt, gelangt Luft in den Behälter 1. Der 0₂-Partialdruck ändert sich dadurch. Dieses wird vom Messgerät 6 festgestellt, das seinerseits über die Auswerteeinheit 11 eine Leckanzeige auslöst. Der Drucksensor 7 und das Messgerät 9 ermöglichen es, das Verhältnis von 0₂-Partialdruck und Totaldruck, d.h. die O₂-Konzentration auszuwerten. Falls die Sauerstoffkonzentration z. B. höher als 15 % liegt, kann eine Leckanzeige ausgelöst werden.

Es besteht weiterhin die Möglichkeit, während der Evakuierung des Behälters 1 sich auswirkende, vorher bereits vorhandene Lecks 13 festzustellen. Dieses kann z. B. dadurch geschehen, dass die während der Evakuierung zu festgelegten Zeitpunkten gemessenen Werte des 0₂-Partialdruckes in der Auswerteeinheit 11 mit den Werten früherer Messungen verglichen werden, die bei einem dichten Behälter 1 aufgenommen und gespeichert wurden.

Die in Figur 1 dargestellte Einrichtung umfasst weiterhin eine Sprühpistole 15, die an einen Druckbehälter 16 mit sauerstofffreiem Gas, z.B. N₂, angeschlossen ist. Ist in einer ersten Messphase ein Leck 13 in der Wandung des Behälters 1 festgestellt worden, kann das Leck durch lokales Besprühen des Behälters 1 mit sauerstofffreiem Gas geortet werden. Überstreicht der Gasstrahl das Leck 13, dringt für diese Zeit kein 0₂ in den Behälter 1 ein. Dieses hat einen kurzzeitigen Abfall des 0₂-Partialdruckes im Behälter 1 zur Folge, der vom 0₂-Sensor 4 registriert und vom Messgerät 6 zur Anzeige gebracht wird. Damit ist eine unmittelbare Korrelation des Sprühvorganges mit der Position des Lecks 13 gegeben, so dass eine genaue Lokalisierung des Lecks möglich ist.

Je steiler der Abfall des 0₂-Partialdruckes und/oder je kleiner die Ansprechzeit des 0₂-Sensors ist, desto schneller kann die Leckortung durchgeführt werden. Die Lecksuche und -ortung ist deshalb besonders empfindlich, wenn die ursprüngliche Gasfüllung des Behälters 1 sauerstofffrei ist. Der Abfall des Partialdruckes kann weiterhin durch Verwenung von 0₂-aufzehrenden Gasen als Prüfgas beeinflusst werden. Bei diesen Gasen, z. B. Propan, Butan o. dgl., tritt neben die 0₂-Verdrängung vor dem Leck 13 noch die 0₂-Aufzehrung an der heißen Oberfläche des O₂-Sensors im Behälter 1 auf, so dass der Messeffekt verstärkt ist.

Bei der Ausführung nach Figur 1 sind der 0₂-Sensor 4 und der Drucksensor 7 räumlich getrennt. Auf diese Trennung kann bei 0₂-Festelektrolyt-Sensoren verzichtet werden, da diese üblicherweise mit einem Heizdraht ausgerüstet sind. Figur 2 zeigt einen O₂-Sensor 4 dieser Art. An einem gemeinsamen Träger 18 sind sowohl das O₂-Sensor-Bauteil 19 (z. B. zwei Platinelektroden mit dem dazwischen befindlichen Festelektrolyten) als auch ein Heizdraht 21 befestigt. Der Heizdraht 21 ist in an sich bekannter Weise Bestandteil einer nicht dargestellten Messbrücke und hat damit gleichzeitig die Funktion des Drucksensors eines Wärmeleitungsvakuummeters.

Beim Ausführungsbeispiel nach Figur 3 soll ein mit sauerstofffreiem Gas gefüllter, unter Überdruck stehender Behälter 1 auf Lecks untersucht werden. Der Behälter 1 kann ein Vorratsbehälter für das jeweilige Gas oder ein Prüfling sein, der zum Zwecke der Lecksuche mit Hilfe des Druckbehälters 21 mit dem sauerstofffreien Gas gefüllt wurde.

Die Lecksuche und Leckortung erfolgen mit Hilfe eines Schnüfflers 22, dessen Spitze 23 über den Behälter 1 geführt wird. An den Schnüffler 22 schließt sich eine Leitung an, die mit der Einlassseite einer Förderpumpe 25, z.B. einer Membranpumpe, in Verbindung steht. Auf dem Weg zwischen dem Schnüffler 22 und der Förderpumpe 25 gelangt der angesaugte Gasstrom durch eine Kammer 26, in der sich der Sauerstoffsensor 4 befindet, der - wie bei der Ausführung nach Figur 1 - seine Signale über die Leitung 5 dem Messgerät 6 zuführt.

Solange der Schnüffler 22 Luft ansaugt, liefert der Sensor 4 aufgrund des Sauerstoffes in der Luft ein gleichbleibendes Signal. Überstreicht die Schnüffelspitze 23 ein Leck, wird die Sauerstoffzufuhr reduziert oder unterbrochen. Wie zur Leckortung beim Ausführungsbeispiel nach Figur 1 beschrieben, registriert der Sauerstoffsensor 4 die Veränderung des O₂-Partialdruckes, so dass nicht nur das Vorhandensein des Lecks sondern auch seine Lage feststellbar sind. Auch bei diesem Verfahren wird der Messeffekt verstärkt, wenn sich im Behälter oder Prüfling 1 0₂-aufzehrende Gase befinden.

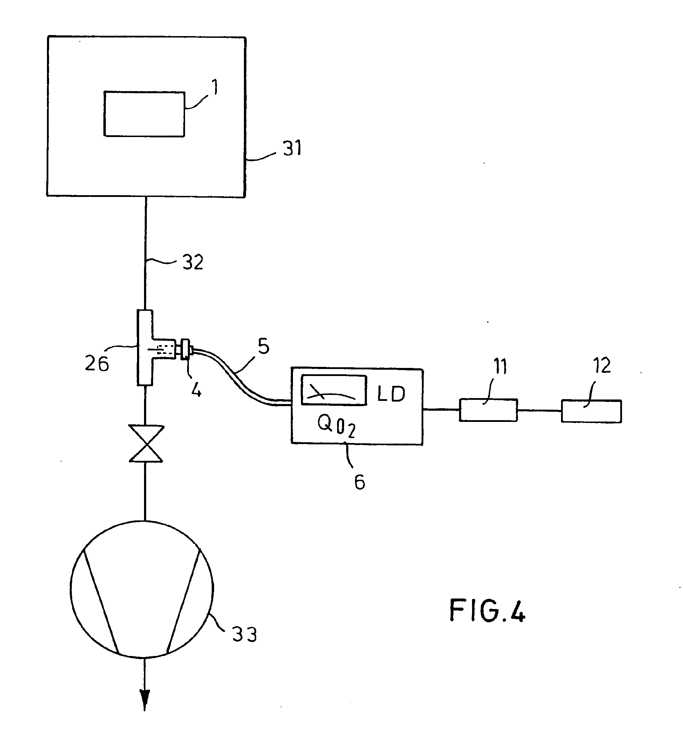

Figur 4 zeigt eine Ausführungsform, bei dem ein mit sauerstoffhaltigem Gas gefüllter Prüfling 1 in einer Prüfkammer 31 integral auf Lecks geprüft wird. In an sich bekannter Weise wird die Prüfkammer 31 über die Leitung 32 von der Vakuumpumpe 33 evakuiert. In der Leitung 32 befindet sich die Kammer 26 mit dem 0₂-Sensor. Tritt während der Evakuierung 0₂ aus dem Prüfling 1 aus, durchströmt dieser die Kammer 26 und wird vom Sensor 4 und Messgerät 6 registriert. Wie beschrieben, kann der Vergleich der Messergebnisse mit früheren Messungen an dichten Prüflingen 1 zu besseren Lecksuch-Ergebnissen führen. Dieses Ziel wird auch dadurch erreicht, dass die Prüfkammer nach dem Einbringen des Prüflings 1 mit sauerstofffreiem Gas geflutet wird, so dass vorhandener Luftsauerstoff die Lecksuche nicht stört.

## Patentansprüche

1. Verfahren zur Feststellung von Lecks in der Wandung eines geschlossenen Prüflings, Behälters oder dergleichen durch Messung und Auswertung von Änderungen eines Gaspartialdruckes, bei welchem Änderungen des Partialdruckes von Sauerstoff mit Hilfe eines Sauerstoffsensors (4) festgestellt und ausgewertet werden, bei welchem zwischen der Innenseite und der Außenseite des Prüflings eine Druckdifferenz besteht und der Sauerstoffsensor auf der Seite des niedrigeren Druckes angeordnet ist, **dadurch gekennzeichnet, dass** zur Lecklokalisierung ein Gasstrahl verwendet wird, der beim Vorhandensein eines Lecks ein Abfallen des Sauerstoffsensorsignals bewirkt.

2. Verfahren nach Anspruch 1, bei dem der Prüfling unter Unterdruck steht, **dadurch gekennzeichnet, dass** die Außenseite des Prüflings mit einem sauerstofffreien Gasstrahl besprüht wird.

3. Verfahren nach Anspruch 1 oder 2, **dadurch gekennzeichnet, dass** die ursprüngliche Füllung des Prüflings sauerstofffrei ist.

4. Verfahren nach Anspruch 2 oder 3, **dadurch gekennzeichnet, dass** für den Gasstrahl sauerstoffaufzehrendes (oxidierbares) Gas wie Propan, Butan oder der gleichen verwendet wird.

5. Verfahren nach Anspruch 1,2, 3 oder 4, **dadurch gekennzeichnet, dass** O₂-Pestelektrolyt-Sensoren (4) eingesetzt werden.

6. Verfahren nach Anspruch 2, 3, 4 oder 5, **dadurch gekennzeichnet, dass** die Feststellung von Lecks (13) in der Wandung des Prüflings mit Hilfe eines im Behälter (1) befindlichen Sauerstoffsensors (4) durchgeführt wird.

7. Verfahren nach einem der Ansprüche 1 bis 6,9 **dadurch gekennzeichnet, dass** ZU bestimmten Zeitpunkten gemessene Werte des 0₂-Partialdruckes mit unter gleichen Bedingungen bei dichten Behältern (1) gemessenen Werten verglichten werden.

8. Verfahren nach einem der Ansprüche 2 bis 7, **dadurch gekennzeichnet, dass** neben den Partialdruckmessungen mit Hilfe des Sauerstoffsensors (4) Totaldruckmessungen mit Hilfe eines Drucksensors (7) durchgeführt werden, die bei der Auswertung berücksichtigt werden.

9. Einrichtung zur Durchführung eines Verfahren zur Feststellung von Lecks in der Wandung eines geschlossenen Prüflings, Behälters oder dergleichen durch Messung und Auswertung Von Änderungen eines Gaspartialdruckes, bei welchem Änderungen des Partialdruckes von sauerstoff mit Hilfe eines Sauertoffsensors, (4) festgestellt und ausgewertet werden, bei welchem zwischen der Innenseite und der Außenseite des Prüflings eine, Druckdifferenz besteht und der Sauerstoffsensor auf der Seite des niedrigeren Druckes angeordnet ist, bei welchem zur Lecklokalisierung ein Gasstrahl verwendet wird, der beim Vorhandensein eines Lecks ein Abfallen des sauertoffsensorsignals bewirkt, bei welchem der Prüfling unter Unterdruck steht und bei welchem zur Lokalisierung des Lecks die Außenseite des Prüflings mit einem sauersfofffrein Gasstrahl besprüht wird, **dadurch gekennzeichnet, dass** eine Sprühpistole (15) für Sauerstofffreies und/oder saüerstoffaufzehrendes (oxidierbares) Gas zum Zwecke der Leckortung vorgesehen ist.

10. Einrichtung nach Anspruch 9, **dadurch gekennzeichnet, dass** ein Säuerstöffsensor (4), vorzusweise ein O²⁻ Festelektrolyt-Sensor, vorgesehen ist, der mit Mess- und Auswerteeinrichtungen (6, 11, 12) in Verbindung steht.

11. Einrichtung nach Anspruch 10, **dadurch gekennzeichnet, dass** sich der Sauerstoffsensor (4) im Prüfling befindet und dass Bestandteil der Einrichtung eine an den Behälter (1) angeschlossene Vakuumpumpe, (2) ist.

12. Einrichtung nach Anspruch 11, **dadurch gekennzeichnet, dass** sich im Prüfling (1) zusätzlich ein Drucksensor (7) befindet.

13. Einrichtung nach Anspruch 12, **dadurch gekennzeichnet, dass** ein Heizdraht (21) der Sauerstoffsensors (4) den Drucksensor (7) bildet.

14. Verfahren zur Feststellung von Lecks in der Wandung eines geschlossenen Prüflings, Behälters oder dergleichen durch Messung und Auswertung von Änderungen eines. Gaspartialdruckes, bei welchem Änderungen des Partialdruckes von Sauerstoff mit Hilfe eines Sauerstoffsensors (4) festgestellt und ausgewertet werden, bei welchem zwischen der Innenseite und der Außenseite des Prüflings eine Druckdifferenz besteht und der Saurerstoffsensor auf der Seite des niedrigeren Druckes angeordnet ist, bei welchem zur Lecklokalisierung ein Gasstrahl verwender wird, der beim Vorhandensein eines Lecks ein Abfallen des Sauerstoffsehsorsignäls bewirkt und bei welchem der Prüfling unter Überdruck steht **dadurch gekennzeichnet, dass** der Prüfling mit sauerstofffreiem, vorzugsweise sauerstoffaufzehrendem (oxidierbarem) Gas gefüllt ist, dass die Lecksuche bzw. Leckortung in der Weise durchgeführt wird, dass er mit Hilfe einer Schnüffelspitze (23) abgeschnüffelt wird, und dass der von der Schnüffelspitze (23) abgesaugte Gasstrahl mit Hilfe des Sauerstoffsensors (4) auf das Vorhandensein von Sauerstoff untersucht wird.

15. Verfahren nach Anspruch 14, **dadurch gekennzeichnet, dass** das von der Schnüffelspitze (23) angesaugte Gas durch eine Kammer (26) strömt, in der sich der Sauerstoffsensor (4) befindet.

16. Verfahren nach Anspruch 14 oder 15 **dadurch gekennzeichnet, dass** die Auswertung dadurch erfolgt, dass die Messwerte mit Messwerten verglichten werden, die sich bei Untersuchungen an dichten Prüflingen (1) ergebern haben.

17. Einrichtung zur Durchführung eines Verfahrens zur Feststellung von Lecks in der Wandung eines geschlossenen Prüflings, Behälters oder dergleichen durch Messung und Auswertung von Änderungen eines Gaspartialdruckes, bei welchem Änderungen des Partialdruckes von Sauerstoff mit Hilfe eines Sauerstöffsensors (4) festgestellt und ausgewertet werden, bei welchem zwischen der Innenseite und der Außenseite des Prüflings eine Druckdifferenz besteht und der Sauerstoffsensor auf der Seite des niedrigeren Druckes angeordnet ist, bei welchem zur Lecklökalisierung ein Gasstrahl verwendet wird, der beim Vorhandensein eines Lecks ein Abfallen des Sauerstoffsensorsignals bewirkt, bei welchem der Prüfling unter Überdruck steht, bei welchem der Prüfling mit sauerstofffreiem, vorzugsweise sauerstoffaufzehrendem (oxidierbarem) Gas gefüllt ist bei welchem die Lecksuche bzw. Leckortung in der Weise durchgeführt wird, dass er mit Hilfe einer Schnüffelspitze (23) abgeschnüffelt wird, und bei welchem der von der Schnüffelspitze (23) abgesaugte Gasstrahl mit Hilfe des Sauerstoffsensors (4) auf das Vorhandensein, von Sauerstoff untersucht wird, **dadurch gekennzeichnet, dass** sich an die Schüffelspitze (23) eine Leitung (24) mit einer Kammer (26) anschließt, in der sich der Sauerstoffsensor (4) befindet.

18. Einrichtung nach Anspruch .17, **dadurch gekennzeichnet, dass** die die Gasströmung erzeugende Förderpumpe (25) eine Membranpumpe ist.

## Claims

1. Method for detecting leaks in the wall of a closed test object, container or similar, by measuring and evaluating changes that occur in a partial gas pressure, wherein changes in the partial pressure of oxygen are determined and evaluated with the aid of an oxygen sensor (4), wherein a differential pressure exists between the interior and the outside of the test object, and the oxygen sensor is arranged on the low pressure side, **characterized in that** for the purpose of localizing a leak a gas jet is used that causes a drop in the oxygen sensor signal if a leak exists.

2. Method according to claim 1, wherein a low pressure exists in the test object, **characterized in that** the outer side of the test object is sprayed with an oxygen-free gas jet.

3. Method according to claim 1 or 2, **characterized in that** the initial filling of the test object is oxygen-free.

4. Method according to claim 2 or 3, **characterized in that** an oxygen consuming (oxidisable) gas like propane, butane or alike is employed for the gas jet.

5. Method according to claim 1, 2, 3 or 4, **characterized in that** solid electrolyte O₂ sensors (4) are employed.

6. Method according to claim 2, 3, 4 or 5, **characterized in that** leakages (13) in the wall of the test object are determined with the aid of an oxygen sensor (4) located within the container (1).

7. Method according to one of claims 1 to 6, **characterized in that** partial pressure values of O₂ measured at certain points of time are compared with the values measured under the same conditions on leak-tight containers (1).

8. Method according to one of claims 2 to 7, **characterized in that** besides the partial pressure measurements with the aid of the oxygen sensor (4), total pressure measurements are performed with the aid of a pressure sensor (7) which are taken in to account in the evaluation.

9. Device for performing a method for detecting leaks in the wall of a closed test object, container or similar, by measuring and evaluating changes that occur in a partial gas pressure, wherein changes in the partial pressure of oxygen are determined and evaluated with the aid of an oxygen sensor (4), wherein a differential pressure exists between the interior and the outside of the test object, and the oxygen sensor is arranged on the low pressure side, wherein for the purpose of localizing a leak a gas jet is used that causes a drop in the oxygen sensor signal if a leak exists, wherein a low pressure exists in the test object, and wherein the outer side of the test object is sprayed with an oxygen-free gas jet, **characterized in that** a spray gun (15) for oxygen-free and/or oxygen consuming (oxidisable) gas is provided for the purpose of leakage localisation.

10. Device according to claim 9, **characterized in that** an oxygen sensor (4), preferably a solid electrolyte O₂ sensor, is provided that is connected with measuring and evaluation means (6, 11, 12).

11. Device of claim 10, **characterized in that** the oxygen sensor (4) is located in the test object and that as a component of the device there is provided a vacuum pump (2) connected to the container (1).

12. Device according to claim 11, **characterized in that** a pressure sensor (7) is located in addition in the test object (1).

13. Device according to claim 12, **characterized in that** a heated filament (21) of the oxygen sensor (4) forms the pressure sensor (7).

14. Method for detecting leaks in the wall of a closed test object, container or similar, by measuring and evaluating changes that occur in a partial gas pressure, wherein changes in the partial pressure of oxygen are determined and evaluated with the aid of an oxygen sensor (4), wherein a differential pressure exists between the interior and the outside of the test object, and the oxygen sensor is arranged on the low pressure side, wherein for the purpose of localizing a leak a gas jet is used that causes a drop in the oxygen sensor signal if a leak exists, and wherein an overpressure exists in the test object, **characterized in that** the test object is filled with an oxygen-free, preferably oxygen consuming (oxidizable) gas, that the leak detection or localization is performed such that it is sniffed using a sniffer tip (23), and that the gas jet drawn by the sniffer tip (23) is checked for the presence of oxygen using the oxygen sensor (4).

15. Method according to claim 14, **characterized in that** the gas drawn by the sniffer tip (23) flows through a chamber (26) in which the oxygen sensor (4) is situated.

16. Method according to claim 14 or 15, **characterized in that** the evaluation is effected by comparing the measured values with measured values obtained in tests on tight test objects (1).

17. Device for performing a method for detecting leaks in the wall of a closed test object, container or similar, by measuring and evaluating changes that occur in a partial gas pressure, wherein changes in the partial pressure of oxygen are determined and evaluated with the aid of an oxygen sensor (4), wherein a differential pressure exists between the interior and the outside of the test object, and the oxygen sensor is arranged on the low pressure side, wherein for the purpose of localizing a leak a gas jet is used that causes a drop in the oxygen sensor signal if a leak exists, wherein an overpressure exists in the test object, wherein the test object is filled with an oxygen-free, preferably oxygen consuming (oxidizable) gas, wherein the leak detection or localization is performed such that it is sniffed using a sniffer tip (23), and wherein the gas jet drawn by the sniffer tip (23) is checked for the presence of oxygen using the oxygen sensor (4), **characterized in that** the sniffer tip (23) is joined by a line (24) with a chamber (26) in which the oxygen sensor (4) is located.

18. Device of claim 17, **characterized in that** the feed pump (25) generating the gas flow is a membrane pump.

## Revendications

1. Procédé pour détecter des fuites dans les parois d'un objet de test fermé, un récipient ou similaire, par mesurage et évaluation de variations dans une pression partielle de gaz, dans lequel variations de la pression partielle de l'oxygène sont détectées et évaluées à l'aide d'un capteur d'oxygène (4), dans lequel existe une pression différentielle entre l'intérieur et l'extérieur dudit objet de test et ledit capteur d'oxygène est disposé au côté de pression plus basse, **caractérisé en ce que** pour la localisation d'une fuite on utilise un jet de gaz qui, en cas de l'existence d'une fuite, cause une chute du signal du capteur d'oxygène.

2. Procédé selon la revendication 1, dans lequel ledit objet de test est en état dépressurisé, **caractérisé en ce qu'**un jet de gaz sans oxygène est projeté à l'extérieur dudit objet de test.

3. Procédé selon la revendication 1 ou 2, **caractérisé en ce que** la charge initiale dudit objet de test ne contient pas de l'oxygène.

4. Procédé selon la revendication 2 ou 3, **caractérisé en ce que** pour le jet de gaz on utilise un gaz consommant d'oxygène (oxydable) comme le propane, le butane ou similaire.

5. Procédé selon la revendication 1, 2, 3 ou 4, **caractérisé en ce que** l'on utilise des capteurs à électrolyte solide sensibles à O₂ (4).

6. Procédé selon la revendication 2, 3, 4 ou 5, **caractérisé en ce que** la détection des fuites (13) dans les parois dudit objet de test se fait à l'aide d'un capteur d'oxygène (4) situé dans le récipient (1).

7. Procédé selon l'une quelconque des revendications 1 à 6, **caractérisé en ce que** des valeurs de ladite pression partielle d'O₂ mesurées à des moments définis sont comparées à des valeurs mesurées sous des conditions égales pour des récipients (1) étanches.

8. Procédé selon l'une quelconque des revendications 2 à 7, **caractérisé en ce qu'**à part les mesurages de la pression partielle à l'aide dudit capteur d'oxygène (4), on fait des mesurages de la pression totale à l'aide d'un capteur de pression (7) qui sont considérées dans l'évaluation.

9. Dispositif pour le mis en oeuvre d'un procédé pour détecter des fuites dans les parois d'un objet de test fermé, un récipient ou similaire, par mesurage et évaluation de variations dans une pression partielle de gaz, dans lequel variations de la pression partielle de l'oxygène sont détectées et évaluées à l'aide d'un capteur d'oxygène (4), dans lequel existe une pression différentielle entre l'intérieur et l'extérieur dudit objet de test et ledit capteur d'oxygène est disposé au côté de pression plus basse, dans lequel pour la localisation d'une fuite on utilise un jet de gaz qui, en cas de l'existence d'une fuite, cause une chute du signal du capteur d'oxygène, dans lequel un jet de gaz sans oxygène est projeté à l'extérieur dudit objet de test, **caractérisé en ce qu'**une pistolet pulvérisateur (15) pour gaz sans oxygène et/ou gaz consommant d'oxygène (oxydable) est prévue pour la localisation des fuites.

10. Dispositif selon la revendication 9, **caractérisé en ce qu'**un capteur d'oxygène (4), de préférence un capteur à électrolyte solide sensible à O₂, est prévu qui est connecté à des moyens de mesurage et évaluation (6, 11, 12).

11. Dispositif selon la revendication 10, **caractérisé en ce que** ledit capteur d'oxygène est situé dans l'objet de test et qu'une pompe à vide (2) raccordée au récipient (1) fait partie du dispositif.

12. Dispositif selon la revendication 11, **caractérisé en ce qu'**en outre un capteur de pression (7) se trouve dans l'objet de test (1).

13. Dispositif selon la revendication 12, **caractérisé en ce qu'**un fil chauffant (21) du capteur d'oxygène (4) forme le capteur de pression (7).

14. Procédé pour détecter des fuites dans les parois d'un objet de test fermé, un récipient ou similaire, par mesurage et évaluation de variations dans une pression partielle de gaz, dans lequel variations de la pression partielle de l'oxygène sont détectées et évaluées à l'aide d'un capteur d'oxygène (4), dans lequel existe une pression différentielle entre l'intérieur et l'extérieur dudit objet de test et ledit capteur d'oxygène est disposé au côté de pression plus basse, dans lequel pour la localisation d'une fuite on utilise un jet de gaz qui, en cas de l'existence d'une fuite, cause une chute du signal du capteur d'oxygène, et dans lequel ledit objet de test est sous surpression, **caractérisé en ce que** ledit objet de test est rempli de gaz sans oxygène et/ou gaz consommant d'oxygène (oxydable), que la détection ou la localisation de fuites se fait par renifler ledit objet à l'aide d'une pointe renifleuse (23), et que le jet de gaz aspiré par ladite pointe renifleuse (23) est analysé pour la présence de l'oxygène à l'aide du capteur d'oxygène (4).

15. Procédé selon la revendication 14, **caractérisé en ce que** le gaz aspiré par la pointe renifleuse (23) s'écoule à travers une chambre (26) dans laquelle se trouve ledit capteur d'oxygène (4).

16. Procédé selon les revendications 14 ou 15, **caractérisé en ce que** l'évaluation se fait par comparaison des valeurs mesurées avec de valeurs mesurées obtenues par des tests avec des objets de test (1) étanches.

17. Dispositif pour la mise en oeuvre d'un procédé pour détecter des fuites dans les parois d'un objet de test fermé, un récipient ou similaire, par mesurage et évaluation de variations dans une pression partielle de gaz, dans lequel variations de la pression partielle de l'oxygène sont détectées et évaluées à l'aide d'un capteur d'oxygène (4), dans lequel existe une pression différentielle entre l'intérieur et l'extérieur dudit objet de test et ledit capteur d'oxygène est disposé au côté de pression plus basse, dans lequel pour la localisation d'une fuite on utilise un jet de gaz qui, en cas de l'existence d'une fuite, cause une chute du signal du capteur d'oxygène, et dans lequel ledit objet de test est sous surpression, dans lequel ledit objet de test est rempli de gaz sans oxygène et/ou gaz consommant d'oxygène (oxydable), dans lequel la détection ou la localisation de fuites se fait par renifler ledit objet à l'aide d'une pointe renifleuse (23), et dans lequel le jet de gaz aspiré par ladite pointe renifleuse (23) est analysé pour la présence de l'oxygène à l'aide du capteur d'oxygène (4), **caractérisé en ce qu'**une ligne (24) avec une chambre (26) joint la pointe renifleuse (23), ledit capteur d'oxygène (4) étant situé dans ladite chambre.

18. Dispositif selon la revendication 17, **caractérisé en ce que** la pompe de refoulement (25) effectuant l'écoulement de gaz est une pompe à membrane.
